(19) Europäisches Patentamt / European Patent Office / Office européen des brevets

(11) **EP 2 767 567 B1**

(12) **EUROPEAN PATENT SPECIFICATION**

(45) Date of publication and mention
of the grant of the patent:
**01.01.2020   Bulletin 2020/01**

(51) Int Cl.:
*C09J 7/26* (2018.01)          *C09J 7/38* (2018.01)
*C09J 153/02* (2006.01)

(21) Application number: **12840746.7**

(22) Date of filing: **11.10.2012**

(86) International application number:
**PCT/KR2012/008260**

(87) International publication number:
**WO 2013/055122 (18.04.2013 Gazette 2013/16)**

(54) **ADHESIVE TAPE FOR CAR**

KLEBEBAND FÜR FAHRZEUGE

BANDE ADHÉSIVE POUR VOITURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **11.10.2011   KR 20110103502**

(43) Date of publication of application:
**20.08.2014   Bulletin 2014/34**

(73) Proprietor: **LG Chem, Ltd.**
**Yeongdeungpo-gu**
**Seoul 07336 (KR)**

(72) Inventors:
• **JANG, Ae Jung**
  **Gyeonggi-do 426-818 (KR)**
• **KIM, Jang Soon**
  **Seongnam-si**
  **Gyeonggi-do 463-420 (KR)**
• **YOO, Seung Min**
  **Gunpo-si**
  **Gyeonggi-do 435-050 (KR)**

(74) Representative: **Plasseraud IP**
**66, rue de la Chaussée d'Antin**
**75440 Paris Cedex 09 (FR)**

(56) References cited:
EP-A1- 2 226 369          WO-A1-2008/070386
WO-A1-2010/101738          KR-A- 20090 094 441
US-A1- 2011 217 542          US-B1- 6 231 962

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a pressure-sensitive adhesive tape, which includes an acrylic foam layer and rubber-based adhesive layers formed on both sides of the acrylic foam layer, wherein the rubber-based adhesive layers have a gel content of 40% to 80%.

[Background Art]

Korean Patent Publication No. 2007-0041896 discloses a UV curable adhesive composition and an adhesive tape. However, although a UV curing method has merits, such as instantaneous curing, low curing temperature, non-pollution/stability, uniformity of quality, and the like, raw materials of the adhesive tape are high-priced and a polymerization initiator or a sensitizer is mixed therein, and thus there can be a problem in that polymerization is performed to change quality of the adhesive tape when the adhesive tape is kept for a long time. Thus, a novel curing method is required.

Moreover, Korean Patent Publication No. 2007-0004837 provides a pressure-sensitive adhesive tape having a core layer including a rubber-based pressure-sensitive adhesive. However, recently, since an adhesive tape for automobiles must endure environments, such as UV, rainwater, and the like, for a long time and external physical impact, vibration and the like as well, an acrylic foam tape is applied. In this regard, there is an urgent need for a rubber-based adhesive and an acrylic foam tape including the rubber-based adhesive.

EP 2 226 369 A1 discloses an adhesive article comprising a foam layer having first and second major sides and a pressure-sensitive adhesive layer associated with at least one of the major sides for the foam layer. The pressure-sensitive adhesive layer comprises a cross-linked rubber, and the foam layer comprises an acrylic polymer obtainable by polymerization of a polymerizable composition comprising one or more alkyl acrylates having an average of 3 to 14 carbon atoms in the alkyl groups, one or more polar monomers and one or more multi-functional monomers having at least two free radical polymerizable groups. Specific examples include a foam layer comprising an acrylic polymer formed from a composition comprising a monomer mixture of 2-ethylhexyl acrylate and acrylic acid, 2,2-dimethoxy-2-phenylacetophenone (Irgacure 651) as a photoinitiator and a curing agent such as hexanediol diacrylate (HDDA). The pressure-sensitive adhesive layers may comprise a linear styrene-isoprene-styrene (SIS) block copolymer applied on both sides of the foam layer. The foam core and both adhesive skins are cross-linked using electron beam curing wherein an acceleration voltage of 235 or 247 keV and a radiation dose of 10 or 11.5 MRad is applied. A similar disclosure is found in WO 2008/070386 A1.

[Disclosure]

[Technical Problem]

It is an aspect of the present invention to provide a pressure-sensitive adhesive tape, which includes an acrylic foam layer exhibiting excellent impact absorption and a rubber-based adhesive layer exhibiting excellent adhesion even to substrates having low surface energy.

[Technical Solution]

It is an aspect of the present invention to provide a pressure-sensitive adhesive tape according to claim 1, which includes: an acrylic foam layer; and rubber-based adhesive layers formed on both sides of the acrylic foam layer, wherein the rubber-based adhesive layers have a gel content of 40% to 80%.

It is another aspect of the present invention to provide a method for preparing a pressure-sensitive adhesive layer according to claim 11, which includes: preparing an acrylic foam layer; and forming a rubber-based adhesive layer(s) on one or both sides of the acrylic foam layer, wherein the step of forming a rubber-based adhesive layer(s) includes: preparing a styrene block copolymer; forming a rubber-based adhesive layer(s) by adding a tackifier and a plasticizer to the styrene block copolymer; and setting a gel content of the rubber-based adhesive layer(s) to 40% to 80%.

[Advantageous Effects]

According to the invention, the pressure-sensitive adhesive tape including a rubber-based adhesive layer exhibits excellent impact absorption, particularly outstanding adhesion to automobiles, and excellent adhesion even to substrates having low surface energy.

According to the invention, since the method for preparing a pressure-sensitive adhesive tape includes curing through electron beam irradiation, the method provides short curing time and high degree of curing and thus is highly useful in terms of environmental impact and production.

[Description of Drawings]

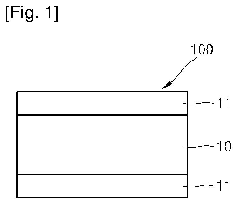

Fig. 1 is a sectional view of a pressure-sensitive adhesive tape according to one embodiment of the present invention.

[Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like components will be denoted by like reference numerals throughout the specification.

Hereinafter, embodiments of the present invention will be described in detail.

Pressure-sensitive adhesive tape

The present invention provides a pressure-sensitive adhesive tape including: an acrylic foam layer; and rubber-based adhesive layers formed on both sides of the acrylic foam layer.

Acrylic foam layer

The acrylic foam layer includes an acrylic resin. According to the invention, the acrylic resin includes a C1 to C12 alkyl group-containing (meth)acrylic acid ester monomer, and may further include an acrylic acid, without being limited thereto. Here, if the monomer includes a very long-chain alkyl group, the adhesive can suffer from deterioration in cohesion and has difficulty in adjustment of glass transition temperature (Tg) or adhesion. Thus, it is desirable that the C1 to C12 alkyl group-containing (meth)acrylic acid ester monomer be used. The (meth)acrylic acid ester monomer and the acrylic acid may be present in any amount without limitation so long as the amount can provide desired effects. The (meth)acrylic acid ester monomer may be present in an amount of 85% by weight (wt%) to 95 wt%, and the acrylic acid may be present in an amount of 5 wt% to 15 wt%. If the amount of the acrylic acid is less than 5 wt%, the acrylic foam layer can suffer from deterioration in adhesion, and if the amount of the acrylic acid exceeds 15 wt%, the acrylic foam layer can suffer from deterioration in cohesion.

Examples of the (meth)acrylic acid ester monomer may include alkyl (meth)acrylate, methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, and tetradecyl (meth)acrylate, without being limited thereto. These may be used alone or in combination thereof.

In addition, the acrylic acid copolymerizable with the (meth)acrylic acid ester monomer is a polar monomer. The acrylic acid may include a carboxyl group-containing monomer and/or a nitrogen-containing monomer, without being limited thereto. For example, the carboxyl group-containing monomer may include at least one selected from the group consisting of (meth)acrylic acid, maleic acid, and fumaric acid, and the nitrogen-containing monomer may include at least one selected from the group consisting of acrylamide, N-vinylpyrrolidone, and N-vinyl caprolactam.

According to the invention, the acrylic foam layer may further include a photoinitiator and a cross-linking agent in the composition including the C1 to C12 alkyl group-containing (meth)acrylic acid ester monomer and the acrylic acid.

The photoinitiator can initiate curing reaction of the composition upon irradiation with UV light or the like in a process of forming the acrylic foam layer. The photoinitiator may be any one typically used in the art without limitation.

Examples of the photoinitiator may include at least one selected from the group consisting of benzoin methyl ether, 2,4,6-trimethylbenzoyl diphenylphosphine oxide, bis(2,4,6-trimethylbenzoyl) phenylphosphine oxide, $\alpha,\alpha$-methoxy-$\alpha$-hydroxyacetophenone, 2-benzoyl-2-(dimethylamino)-1-[4-(4-morphonyl)phenyl]-1-butanone, and 2,2-dimethoxy-2-phenylacetophenone. The photoinitiator may be present in an amount of 0.01 parts by weight to 1 part by weight based on 100 parts by weight of the composition. If the amount of the photoinitiator is less than 0.01 parts by weight, the composition cannot be sufficiently cross-linked and does not have improved cohesion, and if the amount of the photoinitiator exceeds 1 part by weight, the composition can be significantly deteriorated in initial tack and adhesion.

The cross-linking agent can adjust adhesion in terms of improvement of cohesion. According to the invention, the cross-linking agent may be a component, which can participate in reaction upon irradiation with UV light or the like, without being limited thereto.

Examples of the cross-linking agent may include at least one selected from the group consisting of polyfunctional acrylate cross-linking agents, such as 1,6-hexanediol diacrylate, trimethylolpropane triacrylate, pentaerythritol triacrylate, 1,2-ethyleneglycol diacrylate, and 1,12-dodecanediol acrylate; polyfunctional isocyanate cross-linking agents; and polyfunctional epoxy cross-linking agents, without being limited thereto. The cross-linking agent may be present in an amount of 0.1 parts by weight to 2 parts by weight based on 100 parts by weight of the composition. If the amount of the cross-linking agent is less than 0.1 parts by weight, the composition can suffer from deterioration in adhesion, and if the amount of the cross-linking agent exceeds 2 parts by weight, the composition can suffer from deterioration in cohesion.

The acrylic foam layer may further include other additives, such as porous fillers, coupling agents, antistatic agents, surfactants, tackifiers, processed oil, and the like, in addition to the photoinitiator and the cross-linking agent. Such additives may be additives typically used in the art, and be appropriately added within a range suitable for the object of the invention.

Rubber-based adhesive layer

The present invention provides a pressure-sensitive adhesive tape including a rubber-based adhesive layer, which has a gel content of 40% to 80%. In particular, the rubber-based adhesive layer has a gel content of 40% to 80% in terms of peel strength and high temperature retention. If the gel content of the rubber-based adhesive layer is less than 40%, the rubber-based adhesive layer can be deteriorated in heat resistance allowing the layer to endure high temperature without change in shape or quality, and can suffer from deterioration in high temperature retention. More particularly, if the gel content of the rubber-based adhesive layer is less than less than 40%, the rubber-based adhesive layer has a loose cross-linking structure, which can be significantly distorted and easily deformed when subjected to external force or stress, whereby the rubber-based adhesive layer can suffer from significant deterioration in durability at high temperature or at high temperature and humidity. On the other hand, if the rubber-based adhesive layer has a gel content of greater than 80%, the rubber-based adhesive layer can be deteriorated in adhesion to a substrate to be bonded.

The gel content denoted by wt% means a percentage of an insoluble rubber-based adhesive in a solvent after adhesion imparting reaction. Generally, the gel content is high for a polymer which is cross-linked to an extremely high degree, and as the degree of cross-linking increases, the gel content also increases.

The rubber-based adhesive layer is cured by electron beam irradiation. Since the rubber-based adhesive layer is polymerized and solidified due to generation of radicals by electron beam irradiation, there is no need for a polymerization initiator and the like, and there is substantially no concern of change in quality. In addition, since electron beam curing provides higher efficiency of energy utilization and faster curing speed than UV curing, high productivity can be expected.

In addition, electron beam irradiation is performed at an irradiation dosage of 300 kGy to 500 kGy. If the irradiation dosage is less than 300 kGy, since sufficient energy for curing is not provided, the gel content is decreased to less than 40%, and thus, the rubber-based adhesive layer can exhibit insufficient cohesion. If the irradiation dosage is greater than 500 kGy, the rubber-based adhesive layer can exhibit insufficient adhesion due to high degree of curing, and there can be a problem in that a product is damaged due to strong energy beam.

Since use of the rubber-based adhesive layer having a gel content of 40% to 80% increases initial adhesion to a certain level, compatibility of the rubber-based adhesive layer with the acrylic foam layer having polarity can be improved. In addition, as the gel content of the rubber-based adhesive layer is maintained at 40% to 80%, the rubber-based adhesive layer can exhibit better adhesion than the acrylic adhesive layer. Further, since the rubber-based adhesive layer exhibits high peel strength and high temperature retention, the rubber-based adhesive layer can be bonded to materials such as metal-coated plastics, and the like.

In addition, according to the invention, the rubber-based adhesive layer includes a styrene block copolymer, and may further include a tackifier and a plasticizer.

The styrene block copolymer is a styrene-isoprene-styrene (SIS) block copolymer. The SIS block copolymer is a kind of rubber-based adhesive, has an A-B-A type polymer structure, and is a styrene thermoplastic elastomer having a molecular structure in which A of an end block is polystyrene and B of a middle block is polyisoprene.

According to the invention, the SIS block copolymer may generally have a solution viscosity (MPa·s [cps], 25°C) from about 100 to about 3000, without being limited thereto. The SIS block copolymer may be present in an amount of 10 wt% to 30 wt% based on a total composition of the rubber-based adhesive layer. If the amount of the SIS block copolymer is less than 10 wt%, the rubber-based adhesive layer can exhibit insufficient cohesion, and if the amount of the SIS block copolymer is greater than 30 wt%, the rubber-based adhesive layer can exhibit insufficient adhesion. In particular, the styrene block copolymer includes 15 wt% to 30 wt% of styrene. The styrene is a hard segment and an amount of the styrene may influence properties of an overall rubber. As the amount of the styrene is increased, the rubber exhibits increased thermoplasticity. If the amount of the styrene is less than 15 wt%, the rubber-based adhesive layer can exhibit insufficient cohesion, and if the amount of the styrene exceeds 30 wt%, the rubber-based adhesive layer can exhibit insufficient adhesion. In particular, the styrene is preferably present in an amount of 15 wt% to 25 wt%.

Examples of the tackifier may include substituted saturated hydrocarbon resins (synthetic petroleum resins), rosin ester derivatives, terpene resins, phenol resins, and the like, without being limited thereto. Here, the substituted saturated hydrocarbon resins are not particularly limited. These may be used alone or in combination thereof.

The tackifier may be present in an amount of 10 parts by weight to 150 parts by weight based on 100 parts by weight of the styrene block copolymer of the rubber-based adhesive layer, without being limited thereto. If the amount of the tackifier is less than 10 parts by weight, the rubber-based adhesive layer can exhibit insufficient adhesion, and if the amount of the tackifier exceeds 150 parts by weight, the rubber-based adhesive layer can exhibit excessively strong adhesion and thus transfer foreign substances to a substrate when peeled off.

Examples of the plasticizer may include: higher alcohols, such as liquid paraffin, hardened oil, hardened castor oil, octyldodecanol, and the like; and fatty acid esters, such as squalane, squalene, castor oil, liquid rubber (polybutene), myristic acid isopropyl, and the like, without being limited thereto. These may be used alone or in combination thereof.

The plasticizer may be present in an amount of 1 part by weight to 10 parts by weight based on 100 parts by weight of the styrene block copolymer of the rubber-based adhesive layer. If the amount of the plasticizer is less than 1 part by weight, the adhesive layer can be excessively cured and thus exhibit insufficient adhesion. In addition, if the amount of the plasticizer exceeds 10 parts by weight, the adhesive layer can be excessively softened, causing stickiness or residues.

The rubber-based adhesive layer may further include an outer skin layer. The outer skin layer may include various plastic films, papers, nonwoven fabrics, glass, and metal, without being limited thereto. Preferably, the outer skin layer is a plastic film such as polyethylene terephthalate (PET) films.

### Method for preparing pressure-sensitive adhesive tape

The present invention provides a method for preparing a pressure-sensitive adhesive layer, which includes: preparing an acrylic foam layer; and forming a rubber-based adhesive layer(s) on one side or both sides of the acrylic foam layer, wherein the step of forming a rubber-based adhesive layer(s) includes: preparing a styrene block copolymer; forming a rubber-based adhesive layer(s) by adding a tackifier and a plasticizer to the styrene block copolymer; and setting a gel content of the rubber-based adhesive layer(s) to 40% to 80%.

The operation of preparing an acrylic foam layer may include: preparing a composition through thermal polymerization of a (meth)acrylic acid ester monomer and acrylic acid; preparing a mixture by adding a photoinitiator and a cross-linking agent to the composition; performing photopolymerization by UV irradiation of the mixture; and preparing an acrylic foam layer by heating the photo-polymerized material.

In addition, the method may include forming the rubber-based adhesive layer(s) on one or both sides of the acrylic foam layer. The operation of forming the rubber-based adhesive layer(s) may include: preparing a styrene block copolymer; forming a rubber-based adhesive layer(s) by adding a tackifier and a plasticizer to the styrene block copolymer; and setting a gel content of the rubber-based adhesive layer(s) to 40% to 80%.

The operation of setting a gel content of the rubber-based adhesive layer(s) to 40% to 80% may be performed by curing the rubber-based adhesive layer(s) through electron beam irradiation. In particular, since electron beams have high energy and exhibit high transmittance in a thickness direction of an adhesive, electron beam curing can also be applied to a thick adhesive layer. Since use of the rubber-based adhesive layer having a gel content of 40% to 80% increases initial adhesion to a certain level, compatibility of the rubber-based adhesive layer with the acrylic foam layer having polarity can be improved. In addition, the rubber-based adhesive layer has a gel content maintained at 40% to 80% and thus can exhibit better adhesion than an acrylic adhesive layer. Further, since the rubber-based adhesive layer exhibits high peel strength and high temperature retention, the rubber-based adhesive layer can also be bonded to materials, such as metal-coated plastics, and the like.

In addition, electron beam irradiation of the rubber-based adhesive layer may be performed at an irradiation dosage of 300 kGy to 500 kGy. If the irradiation dosage is less than 300 kGy, sufficient energy for curing is not provided, so that the gel content is decreased to less than 40%, thereby providing insufficient cohesion. If the irradiation dosage is greater than 500 kGy, the rubber-based adhesive layer can exhibit insufficient adhesion due to high degree of curing, and a product can be damaged due to strong energy beam.

Specific examples of the styrene block copolymer, the tackifier and the plasticizer of the rubber-based adhesive layer are as described above.

The composition may be prepared by drying the solvent before adding the tackifier and the plasticizer to the styrene block copolymer. Examples of the solvent may include ethyl acetate, isopropanol, ethanol, hexane, heptanes, and toluene. The solvent serves to reduce the viscosity of the composition to allow the composition to be easily poured from one container into another container. In addition, the solvent is added in an amount enough to decrease viscosity of the composition to less than about 100 Pascal-second (Pa·s).

The solvent is added in an amount enough to provide a solid content of about 20 wt% to 40 wt% in the composition. The composition having a solid content of greater than 40 wt% can exhibit high viscosity, and the composition having a solid content of less than 20 wt% requires an excess of the solvent above the amount of the solvent enough to decrease the viscosity of the composition to a level for easy working. Appropriate viscosity depends on a method of introducing the composition into an extruder and a type of solvent removal system.

According to the invention, the pressure-sensitive adhesive tape is particularly useful in bonding components, such as lateral molded articles of vehicles, emblems, pin-stripping, and other objects, to an outer surface of substrates, such as automobiles, motorcycles, bicycles, vessels (for example, ships, yachts, boats, and personal ships), aircraft, and other types of land, marine and air vehicles.

The pressure-sensitive adhesive tape exhibits resistance to components, such as petroleum substances including gasoline, lubricants, water-based substances including detergents, front glass cleaning liquids, rainwater, saltwater, and mixtures thereof, which vehicles may frequently encounter when a substrate including such substances is used. In addition, since the pressure-sensitive adhesive tape exhibits resistance to physical force and improved peel strength, the adhesive tape prevents an object from being removed from the substrate due to physical force, such as impact, catch, breakage, or other force.

Hereinafter, the present invention will be explained in more detail with reference to some examples. It should be understood that these examples are provided for illustration only and are not to be in any way construed as limiting the present invention.

<Example 1>

**Preparation of acrylic foam layer**

90 parts by weight of 2-ethylhexyl acrylate and 10 parts by weight of a polar acrylic acid monomer were thermally polymerized in a 1 L glass reactor, thereby obtaining a syrup having a viscosity of 3500 cPs. 0.5 parts by weight of Irgacure-651 ($\alpha,\alpha$-methoxy-$\alpha$-hydroxyacetophenone) as a photoinitiator, and 0.35 parts by weight 1,6-hexanediol diacrylate (HDDA) as a cross-linking agent were mixed with the syrup based on 100 parts by weight of the syrup, followed by sufficient stirring. 5 parts by weight of glass bubbles and 2 parts by weight of silica were mixed therewith, followed by stirring until the components were uniformly mixed. The resultant mixture was subjected to vacuum degassing using a vacuum pump, thereby preparing a 1.0 mm thick acrylic foam tape using a micro bar.

**Preparation of rubber-based adhesive layer**

A composition having a solid content of 20% was prepared from an SIS linear block copolymer including 10% of styrene using a toluene solvent. 150 parts by weight of a tackifier, which improves adhesion, was added to the composition based on 100 parts by weight of the SIS linear block copolymer, followed by stirring. Next, the mixture was subjected to degassing and then coated onto a silicone release PET film, followed by drying in an oven at 80°C for 1 minute and then in an oven of 110°C for 2 minutes, thereby preparing a 50 $\mu$m thick rubber-based adhesive layer. Next, the rubber-based adhesive layer was cured by irradiation with an electron beam (EB) having various intensities (300, 400, and 500 kGy).

Preparation of acrylic foam tape

The rubber-based adhesive layer and the acrylic foam layer were subjected to lamination using a 5 kg roll, thereby preparing an acrylic foam tape.

<Example 2>

An acrylic foam tape was prepared in the same manner as in Example 1 except that the SIS linear block copolymer included 20% of styrene in the preparation of the rubber-based adhesive layer.

<Example 3>

An acrylic foam tape was prepared in the same manner as in Example 1 except that the SIS linear block copolymer included 30% of styrene in the preparation of the rubber-based adhesive layer.

<Example 4>

An acrylic foam tape was prepared in the same manner as in Example 1 except that the SIS linear block copolymer included 40% of styrene in the preparation of the rubber-based adhesive layer.

<Comparative Example>

An acrylic foam tape was prepared in the same manner as in Example 1 except that a polymerization initiator was added and UV curing was performed in the preparation of the rubber-based adhesive layer.

<Experimental Example 1> Measurement of gel content

Each of the rubber-based adhesive layers of Example 1 and Comparative Example were cut into a specimen having a size of 60 mmx60 mm, followed by weighing. Next, the rubber-based adhesive layer were placed in a PET bottle, followed by filling the PET bottle with 50 ml of toluene as a solvent, and then kept at room temperature for two days. The adhesives fully swelled for two days were filtered through a 200 mesh screen of 130 mm×130 mm, followed by drying in an oven of 110°C for 4 hours. Difference between initial and final weights of each of the adhesives was calculated, thereby measuring a final gel content.

[Table 1]

|  | Example 1 | | |
| --- | --- | --- | --- |
| Amount of EB irradiation (kGy) | 300 | 400 | 500 |
| Gel content (%) | 40.1 | 43.6 | 44.6 |
|  | Comparative Example | | |
| Amount of UV irradiation (mJ/cm$^2$) | 2100 | 4200 | 6200 |
| Gel content (%) | 19.3 | 22.5 | 30.3 |

From the result, it could be seen that, as the EB irradiation dosage and the UV irradiation dosage were increased, the gel content was increased, as shown in Table 1. In addition, the EB curable rubber-based adhesive layer of Example 1 had a gel content of 40% or more, whereas the UV curable rubber-based adhesive layer of Comparative Example had a gel content of less than 40%.

<Experimental Example 2> Measurement of 180° peel strength (N/m)

An ABS plate and a painted plate having a width of 50 mm and a length of 120 mm were cleaned with an isopropyl solution, followed by drying. A PET film having a thickness of 0.02 mm and a width of 30 mm was laminated on one surface of each of the rubber-based adhesive layers of Example 1 and Comparative Example so as to form on one side surface of the cover. Each of the prepared samples was placed on each of the ABS plate and the painted plate, followed by rolling five times in each direction using a 2 kg roller, and then left at room temperature for about 30 minutes. Next, 180° peel strength was measured on each specimen at room temperature at a speed of 300 mm/min, and an average value of 5 samples was recorded.

[Table 2]

|  | Example 1 | | |
| --- | --- | --- | --- |
| Amount of EB irradiation (kGy) | 300 | 400 | 500 |
| Gel content (%) | 40.1 | 43.6 | 44.6 |
| Peel strength from ABS plate (N/m) | 3664 | 2741 | 3032 |
| Peel strength from painted plate (N/m) | 2884 | 2435 | 2998 |
|  | Comparative Example | | |
| Amount of UV irradiation (mJ/cm$^2$) | 2100 | 4200 | 6200 |
| Gel content (%) | 19.3 | 22.5 | 30.3 |

(continued)

| | Comparative Example | | |
|---|---|---|---|
| Peel strength from ABS plate (N/m) | 4883 | 4012 | 3872 |
| Peel strength from painted plate (N/m) | 4127 | 3876 | 3345 |

From the result, it could be seen that peel strength varied depending upon the UV irradiation dosage and the EB irradiation dosage. In the specimen of Example 1, the highest adhesion was obtained at 300 kGy corresponding to the lowest gel content, and the acrylic foam layer was broken when the adhesive tape was peeled from the ABS plate and the painted plate. In addition, since the measured peel strength corresponded to foam breaking strength of only the acrylic foam layer instead of adhesion of the rubber-based adhesive layer, higher peel strength would be expected if the adhesive layer was separated from the plates without breakage of the acrylic foam layer.

On the other hand, in Comparative Example, the highest adhesion was obtained at 2100 mJ/cm$^2$ corresponding to the lowest gel content among the results. The reason is that gel content, initial adhesion and peel strength have a correlation with each other. However, since higher gel content generally provides better curing reaction between adhesive polymers, the adhesive tape has improved durability. In this case, however, the adhesive tape exhibits smaller peel strength since the adhesive tape becomes relatively hard. Conversely, if the gel content becomes lower, the peel strength of the adhesive polymer can be relatively increased due to low degree of curing. In this case, however, the adhesive tape exhibits low high temperature retention due to deterioration in durability.

As such, the acrylic foam layer was broken when the EB cured rubber-based adhesive layer of Example 1 was peeled from the ABS plate and the printed plate, whereas the adhesive layer of Comparative Example was separated from the plates. Therefore, it could be seen that, although the rubber-based adhesive layer of Comparative Example exhibited high peel strength, the rubber-based adhesive layer subjected to curing by EB irradiation exhibited better peel strength.

### <Experimental Example 3> Measurement of 90°C high temperature retention

Painted plates having a width of 25 mm and a length of 60 mm were cleaned with an isopropyl solution, followed by drying. The painted plates were laminated on both sides of each of the rubber-based adhesive layers of Example 1 and Comparative Example. Each of the prepared samples was subjected to rolling five times using a 5 kg roller. Each of the samples was left at room temperature for about 30 minutes. Then, a 500 g weight was hung from each of the samples at a high temperature of 90°C, thereby measuring retention as duration time until the adhesive layer was separated from the plate. Then, an average value of 3 samples was recorded.

[Table 3]

| | Example 1 | | |
|---|---|---|---|
| Amount of EB irradiation (kGy) | 300 | 400 | 500 |
| Gel content (%) | 40.1 | 43.6 | 44.6 |
| Creep (min) | 637.3 | 145.8 | 177.8 |
| | Comparative Example | | |
| Amount of UV irradiation (mJ/cm$^2$) | 2100 | 4200 | 6200 |
| Gel content (%) | 19.3 | 22.5 | 30.3 |
| Creep (min) | 21.1 | 121.2 | 244.5 |

From the results, it could be seen that 90°C high temperature retention varied depending upon the UV irradiation dosage and the EB irradiation dosage. The rubber-based adhesive layer of Example 1 exhibited the highest 90°C high temperature retention at 300 kGy corresponding to the lowest gel content.

On the other hand, it could be seen that, although the rubber-based adhesive layer of Comparative Example exhibited the highest 90°C high temperature retention at 6200 mJ/cm$^2$ corresponding to the highest gel content, the rubber-based adhesive layer of Comparative Example exhibited inferior high temperature retention to the samples of Example 1 including the EB cured rubber-based adhesive layer. Thus, it could be seen that even the rubber-based adhesive layer of the same constitution exhibited high temperature retention varying with curing methods, that is, the rubber-based adhesive layer cured by EB irradiation exhibited better high temperature retention.

**<Experimental Example 4> Measurement of 180° peel strength (N/m) of rubber-based adhesive layer**

An ABS plate having a width of 50 mm and a length of 120 mm was cleaned with an isopropyl alcohol solution, followed by drying. A PET film having a thickness of 0.02 mm and a width of 30 mm was laminated on one surface of each of the rubber-based adhesive layers of Examples 1 to 4 so as to form on one side surface of the cover. Here, the rubber-based adhesive layers were cured by EB irradiation of 300 kGy. Each of the prepared samples was placed on the ABS plate, followed by rolling five times in each direction using a 2 kg roller, and then left at room temperature for about 30 minutes. Next, 180° peel strength was measured on each specimen at room temperature at a speed of 300 mm/min, and an average value of 5 samples was recorded.

[Table 4]

| Amount | Amount of styrene of SIS block copolymer (wt%) | Peel strength from ABS plate (N/m) |
| --- | --- | --- |
| Example 1 | 10 | 3464 |
| Example 2 | 20 | 3721 |
| Example 3 | 30 | 3657 |
| Example 4 | 40 | 3294 |

It was confirmed that, since the rubber-based adhesive layers of Examples 1 to 4 included 10 wt% to 40 wt% of the styrene of the SIS block copolymer, the rubber-based adhesive layers exhibited peel strength of a certain level or higher. The styrene included in the SIS block copolymer exhibits relatively hard properties, and softness of the rubber-based adhesive layer can be adjusted by changing the amount of the styrene. If the amount of the styrene is out of the above range, although the rubber-based adhesive layer itself exhibits elasticity, the rubber-based adhesive layer may exhibit insufficient wettability when attached to a substrate.

Specifically, the rubber-based adhesive layers of Examples 2 to 3, corresponding to 20 wt% and 30 wt% of the styrene of the SIS block copolymer, respectively, had a peel strength of about 3700 N/m, and could exhibit excellent peel strength. In addition, it was confirmed that the rubber-based adhesive layers of Examples 1 and 4, corresponding to 10 wt% and 40 wt% of the styrene of the SIS block copolymer, respectively, had a peel strength of about 3200 N/m and exhibited slightly lower peel strength than the rubber-based adhesive layers of Examples 2 and 3.

**Claims**

1. A pressure-sensitive adhesive tape comprising:

   an acrylic foam layer comprising a $C_1$ to $C_{12}$ alkyl group-containing (meth)acrylic acid ester monomer and an acrylic acid; and
   rubber-based adhesive layers formed on both sides of the acrylic foam layer,
   wherein the rubber-based adhesive layers comprise a styrene block copolymer comprising 15 wt% to 30 wt% of styrene, and
   wherein the rubber-based layers contain a gel content of 40% to 80 % as measured according to the method described herein and which is calculated according to the following equation 1:

$$[\text{Equation 1}]:$$

$$\text{Gel content} = B/A$$

   wherein A is the mass of the adhesive, and B is the dry mass of an insoluble fraction of the adhesive obtained by depositing the adhesive in toluene at room temperature for 48 hours, taking the insoluble fraction, and removing toluene from the insoluble fraction,
   wherein the adhesive layers being cured by electron beam irradiation, and
   wherein the electron beam irradiation being performed at an irradiation dosage from 300 kGy to 500 kGy.

2. The pressure-sensitive adhesive tape according to claim 1, wherein the $C_1$ to $C_{12}$ alkyl group-containing (meth)acrylic acid ester monomer is present in an amount of 85 wt% to 95 wt%, and the acrylic acid is present in an amount of 5 wt% to 15 wt%.

3. The pressure-sensitive adhesive tape according to claim 1, wherein the acrylic foam layer comprises 0.01 parts by weight to 1 part by weight of a photoinitiator and 0.1 parts by weight to 2 parts by weight of a cross-linking agent, based on 100 parts by weight of a composition comprising the $C_1$ to $C_{12}$ alkyl group-containing (meth)acrylic acid ester monomer and the acrylic acid.

4. The pressure-sensitive adhesive tape according to claim 1, wherein the rubber-based adhesive layers further comprise a tackifier and a plasticizer.

5. The pressure-sensitive adhesive tape according to claim 1, wherein the styrene block copolymer is present in an amount of 10 wt% to 30 wt% based on a total composition of the rubber-based adhesive layer.

6. The pressure-sensitive adhesive tape according to claim 4, wherein the tackifier is present in an amount of 10 parts by weight to 150 parts by weight, and the plasticizer is present in an amount of 1 part by weight to 10 parts by weight, based on 100 parts by weight of the styrene block copolymer of the rubber-based adhesive layers.

7. The pressure-sensitive adhesive tape according to claim 1, wherein the styrene block copolymer is a styrene-isoprene-styrene (SIS) block polymer.

8. A method for preparing a pressure-sensitive adhesive tape comprising:

preparing an acrylic foam layer comprising a $C_1$ to $C_{12}$ alkyl group-containing (meth)acrylic acid ester monomer and an acrylic acid; and
forming a rubber-based adhesive layer(s) on one side or both sides of the acrylic foam layer,
wherein the step of forming the rubber-based adhesive layer(s) comprises:

preparing a styrene block copolymer comprising 15 wt% to 30 wt% of styrene;
forming a rubber-based adhesive layer(s) by adding a tackifier and a plasticizer to the styrene block copolymer; and
setting a gel content of the rubber-based adhesive layer(s) to 40% to 80%, as measured according to the method described herein and wherein the gel content is calculated according to the following equation 1:

$$[\text{Equation 1}]:$$

$$\text{Gel content} = B/A$$

wherein A is the mass of the adhesive, and B is the dry mass of an insoluble fraction of the adhesive obtained by depositing the adhesive in toluene at room temperature for 48 hours, taking the insoluble fraction, and removing toluene from the insoluble fraction,
wherein the step of setting a gel content of the rubber-based adhesive layer(s) to 40% to 80% being performed by curing the rubber-based adhesive layer(s) through electron beam irradiation, and
wherein electron beam irradiation of the rubber-based adhesive layer(s) being performed at an irradiation dosage of 300 kGy to 500 kGy.

**Patentansprüche**

1. Drucksensitives Klebeband, umfassend:

eine Acryl-Schaum-Schicht, welche ein $C_1$ bis $C_{12}$ Alkyl-Gruppen enthaltendes (Meth)Acrylsäureester-Monomer und eine Acrylsäure umfasst; und
Gummi-basierte Klebeschichten, welche an beiden Seiten der Acryl-Schaum-Schicht gebildet sind,
wobei die Gummi-basierten Schichten ein Styrenblock-Copolymer umfassen, welches 15 Gewichtsprozent bis 30 Gewichtsprozent an Styren umfasst, und
wobei die Gummi-basierten Klebeschichten einen Gel-Bestandteil von 40% bis 80% umfassen, wenn gemäß dem hierin beschriebenen Verfahren gemessen, und welcher gemäß der folgenden Gleichung 1 berechnet wird:

[Gleichung 1]:

$$\text{Gel-Bestandteil} = B/A$$

wobei A die Masse des Adhäsivs ist und B die Trockenmasse eines unlöslichen Bestandteils des Adhäsivs ist, welcher durch Anlagern des Adhäsivs in Toluol bei Raumtemperatur für 48 Stunden, Entnehmen des unlöslichen Bestandteils und Entfernen des Toluols von dem unlöslichen Bestandteil erhalten wird,
wobei die Klebeschichten durch Elektronenstrahl-Bestrahlung gehärtet werden, und
wobei die Elektronenstrahl-Bestrahlung bei einer Bestrahlungsdosis von 300 kGy bis 500 kGy durchgeführt wird.

2. Drucksensitives Klebeband nach Anspruch 1, wobei das $C_1$ bis $C_{12}$ Alkyl-Gruppen enthaltende (Meth)Acrylsäureester-Monomer in einer Menge von 85 Gewichtsprozent bis 95 Gewichtsprozent vorhanden ist und die Acrylsäure in einer Menge von 5 Gewichtsprozent bis 15 Gewichtsprozent vorhanden ist.

3. Drucksensitives Klebeband nach Anspruch 1, wobei die Acryl-Schaum-Schicht 0,01 Gewichtsteile bis 1 Gewichtsteil eines Fotoinitiators und 0,1 Gewichtsteile bis 2 Gewichtsteile eines Querverbindungsmittels auf Grundlage von 100 Gewichtsteilen einer Zusammensetzung umfasst, welche das $C_1$ bis $C_{12}$ Alkyl-Gruppen enthaltende (Meth)Acrylsäureester-Monomer und die Acrylsäure umfasst.

4. Drucksensitives Klebeband nach Anspruch 1, wobei die Gummi-basierten Klebeschichten ferner einen Klebrigmacher und einen Plastifizierer umfassen.

5. Drucksensitives Klebeband nach Anspruch 1, wobei das Styrenblock-Copolymer in einer Menge von 10 Gewichtsprozent bis 30 Gewichtsprozent auf Grundlage einer gesamten Zusammensetzung der Gummi-basierten Klebeschicht vorhanden ist.

6. Drucksensitives Klebeband nach Anspruch 4, wobei der Klebrigmacher in einer Menge von 10 Gewichtsteilen bis 150 Gewichtsteilen vorhanden ist und der Plastifizierer in einer Menge von 1 Gewichtsteil bis 10 Gewichtsteilen vorhanden ist, auf Grundlage von 100 Gewichtsteilen des Styrenblock-Copolymers der Gummi-basierten Klebeschichten.

7. Drucksensitives Klebeband nach Anspruch 1, wobei das Styrenblock-Copolymer ein Styren-Isopren-Styren (SIS) Blockpolymer ist.

8. Verfahren zum Erstellen eines drucksensitiven Klebebands, umfassend:

Erstellen einer Acryl-Schaum-Schicht, welche ein $C_1$ bis $C_{12}$ Alkyl-Gruppen enthaltendes (Meth)Acrylsäureester-Monomer und eine Acrylsäure umfasst; und
Bilden einer Gummi-basierten Klebeschicht / von Gummi-basierten Klebeschichten an einer Seite oder an beiden Seiten der Acryl-Schaum-Schicht,
wobei der Schritt des Bildens der Gummi-basierten Klebeschicht(en) umfasst:

Erstellen eines Styrenblock-Copolymers, welches 15 Gewichtsprozent bis 30 Gewichtsprozent an Styren umfasst;
Bilden einer Gummi-basierten Klebeschicht / von Gummi-basierten Klebeschichten durch Hinzufügen eines Klebrigmachers und eines Plastifizierers zu dem Styrenblock-Copolymer; und
Festlegen eines Gel-Bestandteils von 40% bis 80% der Gummi-basierten Klebeschicht(en), wenn gemäß dem hierin beschriebenen Verfahren gemessen, und wobei der Gel-Bestandteil gemäß der folgenden Gleichung 1 berechnet wird:

[Gleichung 1]:

$$\text{Gel-Bestandteil} = B/A$$

wobei A die Masse des Adhäsivs ist und B die Trockenmasse eines unlöslichen Bestandteils des Adhäsivs ist, welcher durch Anlagern des Adhäsivs in Toluol bei Raumtemperatur für 48 Stunden, Entnehmen des unlöslichen Bestandteils und Entfernen des Toluols von dem unlöslichen Bestandteil erhalten wird,
wobei der Schritt des Festlegens eines Gel-Bestandteils der Gummi-basierten Klebeschicht(en) auf 40% bis 80% durch Härten der Gummi-basierten Klebeschicht(en) durch eine Elektronenstrahl-Bestrahlung durchgeführt wird, und

wobei die Elektronenstrahl-Bestrahlung der Gummi-basierten Klebeschicht(en) bei einer Bestrahlungsdosis von 300 kGy bis 500 kGy durchgeführt wird.

## Revendications

1. Bande adhésive sensible à la pression comprenant :

une couche de mousse acrylique comprenant un monomère d'ester d'acide (méth)acrylique contenant un groupe alkyle en $C_1$ à $C_{12}$ et un acide acrylique ; et

des couches adhésives à base de caoutchouc formées des deux côtés de la couche de mousse acrylique,

dans laquelle les couches adhésives à base de caoutchouc comprennent un copolymère séquencé de styrène comprenant 15 % en poids à 30 % en poids de styrène, et

dans laquelle les couches à base de caoutchouc contiennent une teneur en gel de 40 % à 80 % telle que mesurée selon le procédé décrit dans le présent document et qui est calculée selon l'équation 1 suivante :

$$[\text{Équation 1}] :$$

$$\text{Teneur en gel} = B/A$$

dans laquelle A est la masse de l'adhésif, et B est la masse sèche d'une fraction insoluble de l'adhésif obtenue en déposant l'adhésif dans du toluène à température ambiante pendant 48 heures, en prenant la fraction insoluble, et en éliminant le toluène de la fraction insoluble,

dans laquelle les couches adhésives sont durcies par irradiation par un faisceau d'électrons, et

dans laquelle l'irradiation par faisceau d'électrons est effectuée à une dose d'irradiation de 300 kGy à 500 kGy.

2. Bande adhésive sensible à la pression selon la revendication 1, dans laquelle le monomère d'ester d'acide (méth)acrylique contenant un groupe alkyle en $C_1$ à $C_{12}$ est présent en une quantité de 85 % en poids à 95 % en poids, et l'acide acrylique est présent en une quantité de 5 % en poids à 15 % en poids.

3. Bande adhésive sensible à la pression selon la revendication 1, dans laquelle la couche de mousse acrylique comprend 0,01 partie en poids pour 1 partie en poids d'un photoinitiateur et 0,1 partie en poids pour 2 parties en poids d'un agent de réticulation, sur la base de 100 parties en poids d'une composition comprenant le monomère d'ester d'acide (méth)acrylique contenant un groupe alkyle en $C_1$ à $C_{12}$ et l'acide acrylique.

4. Bande adhésive sensible à la pression selon la revendication 1, dans laquelle les couches adhésives à base de caoutchouc comprennent en outre un agent collant et un plastifiant.

5. Bande adhésive sensible à la pression selon la revendication 1, dans laquelle le copolymère séquencé de styrène est présent en une quantité de 10 % en poids à 30 % en poids sur la base d'une composition totale de la couche adhésive à base de caoutchouc.

6. Bande adhésive sensible à la pression selon la revendication 4, dans laquelle l'agent collant est présent en une quantité de 10 parties en poids à 150 parties en poids, et le plastifiant est présent en une quantité de 1 partie en poids à 10 parties en poids, sur la base de 100 parties en poids du copolymère séquencé de styrène des couches adhésives à base de caoutchouc.

7. Bande adhésive sensible à la pression selon la revendication 1, dans laquelle le copolymère séquencé de styrène est un polymère séquencé de styrène-isoprène-styrène (SIS).

8. Procédé de préparation d'une bande adhésive sensible à la pression comprenant :

la préparation d'une couche de mousse acrylique comprenant un monomère d'ester d'acide (méth)acrylique contenant un groupe alkyle en $C_1$ à $C_{12}$ et un acide acrylique ; et

la formation d'une ou de plusieurs couches adhésives à base de caoutchouc sur un côté ou les deux côtés de la couche de mousse acrylique,
dans lequel l'étape de formation de la(des) couche(s) adhésive(s) à base de caoutchouc comprend :

la préparation d'un copolymère séquencé de styrène comprenant 15 % en poids à 30 % en poids de styrène ;
la formation d'une ou de plusieurs couches adhésives à base de caoutchouc en ajoutant un agent collant et un plastifiant au copolymère séquencé de styrène ; et
la fixation d'une teneur en gel de la(des) couche(s) adhésive(s) à base de caoutchouc à 40 % à 80 %, telle que mesurée selon le procédé décrit dans le présent document et dans lequel la teneur en gel est calculée selon l'équation 1 suivante :

$$[\text{Équation 1}] :$$

$$\text{Teneur en gel} = B/A$$

dans lequel A est la masse de l'adhésif, et B est la masse sèche d'une fraction insoluble de l'adhésif obtenue en déposant l'adhésif dans du toluène à température ambiante pendant 48 heures, en prenant la fraction insoluble, et en éliminant le toluène de la fraction insoluble,
dans lequel l'étape de fixation d'une teneur en gel de la(des) couche(s) adhésive(s) à base de caoutchouc à 40 % à 80 % étant effectuée en durcissant la(les) couche(s) adhésive(s) à base de caoutchouc par irradiation par un faisceau d'électrons, et
dans lequel l'irradiation par faisceau d'électrons de la(des) couche(s) adhésive(s) à base de caoutchouc étant effectuée à une dose d'irradiation de 300 kGy à 500 kGy.

[Fig. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070041896
- KR 20070004837
- EP 2226369 A1
- WO 2008070386 A1